# EUROPEAN PATENT APPLICATION

(11) **EP 3 618 379 A1**
(43) Date of publication of application: **04.03.2020**
(21) Application number: 17915324.2
(22) Date of filing: 29.12.2017
(51) Int. Cl.: H04L 29/06

(54) **IDENTITY VERIFICATION METHOD AND APPARATUS, AND ELECTRONIC DEVICE**

(30) Priority: 28.06.2017 CN 201710508830
(71) Applicant: Beijing Sankuai Online Technology Co., Ltd, Beijing 100102 (CN)
(72) Inventor: SUN, Fengming, Beijing 100080 (CN)
(74) Representative: Kraus & Weisert Patentanwälte PartGmbB
(86) International application number: PCT/CN2017/119772
(87) International publication number: WO 2019/000885

(57) **Abstract**

The present disclosure provides an identity verification method. The method includes: an identity verification request is sent to a verification server according to an identity verification operation from a user; call interception is enabled; and when a call from a calling phone number sent by the verification server in response to the identity verification request is intercepted, the intercepted calling phone number is sent to the verification server as an identity verification code for identity verification of a current user.

## Description

This application claims priority to Chinese Patent Application No. 201710508830.9, filed on June 28, 2017 and entitled "SILENT VERIFICATION METHOD AND APPARATUS AND ELECTRONIC DEVICE", which is incorporated herein by reference in its entirety.

### TECHNICAL FIELD

The present disclosure relates to the field of identity verification.

### BACKGROUND

With the ongoing development of existing internet services, most service products need to determine the authenticity of users. Therefore, when a user performs registration or a highly risky operation, a service system requires identity verification of the user.

Verification using a verification code already becomes an important approach to identity verification. During identity verification using a verification code, usually a verification code is delivered via a short message or a voice verification code is delivered via a Voice over Internet Protocol (VOIP) call. A user then transcribes and enters the received verification code, and submits the verification to complete a verification procedure. For example, when a user signs for a package sent by a flash delivery service, a logistics system sends a voice verification code to a mobile number entered by a client, and confirms that it is the user that has signed for the package after the user has entered the correct voice verification code on the client.

### SUMMARY

Embodiments of the present disclosure provide an identity verification method, to resolve problems that an identity verification method in the prior art has a complex process and is prone to errors.

To resolve the foregoing problem, according to a first aspect, an embodiment of the present disclosure provides an identity verification method, including:
sending, by a client, an identity verification request to a verification server according to an identity verification operation from a user;
enabling, by the client, call interception; and
when a call from a calling phone number sent by the verification server in response to the identity verification request is intercepted, sending, by the client, the intercepted calling phone number to the verification server as an identity verification code for identity verification of the user.

According to a second aspect, an embodiment of the present disclosure provides an identity verification apparatus, including:
an identity verification request sending module, configured to send an identity verification request to a verification server according to an identity verification operation from a user;
a call interception module, configured to enable call interception; and
an identity verification module, configured to: when a call from a calling phone number sent by the verification server in response to the identity verification request is intercepted, send the calling phone number intercepted by the call interception module to the verification server as an identity verification code for identity verification of the user.

According to a third aspect, an embodiment of the present disclosure provides an identity verification method, including:
generating, by a server, according to a received identity verification request from a client, a calling phone number conforming to a preset rule;
using, by the server, the calling phone number to call a phone number pre-registered by a current user of the client;
receiving, by the server, an identity verification code sent by the client, where the identity verification code is the calling phone number intercepted by the client and for identity verification; and
performing, by the server, identity verification of the current user of the client based on the received identity verification code and the generated calling phone number.

According to a fourth aspect, an embodiment of the present disclosure provides an identity verification apparatus, including:
a calling phone number generating module, configured to generate a calling phone number conforming to a preset rule;
a verification call module, configured to use the calling phone number generated by the calling phone number generating module to call a phone number pre-registered by a current user of the client;
an identity verification code receiving module, configured to receive an identity verification code sent by the client, where the identity verification code is the calling phone number intercepted by the client and for identity verification; and
an identity verification module, configured to perform identity verification of the current user of the client based on the identity verification code received by the identity verification code receiving module and the calling phone number generated by the calling phone number generating module.

According to a fifth aspect, an embodiment of the present disclosure provides an electronic device, including a storage medium and a processor, where the storage medium stores machine executable instructions operable on the processor, and when executing the machine executable instructions, the processor implements the identity verification method in the embodiments of the present disclosure.

According to a sixth aspect, an embodiment of the present disclosure provides a machine readable storage medium storing computer programs, where when the computer programs are executed by a processor, the steps in the identity verification method in the embodiments of the present disclosure are implemented.

In the identity verification method disclosed in the embodiments of the present disclosure, an identity verification request is sent to a verification server according to an operation from a user; a call interception operation for a preset calling phone number is enabled; and when a call from the calling phone number is intercepted, the intercepted calling phone number is sent to the verification server as an identity verification code for identity verification of a current user, thereby resolving problems that an identity verification method in the prior art has a complex process and is prone to errors. A calling phone number for identity verification is automatically intercepted and sent to a server as an identity verification code. In this way, a user does not need to memorize and transcribe the identity verification code, so that a verification procedure is simplified, no incorrect verification code will be entered any more, and further, identity verification becomes more efficient. In addition, identity verification takes place after the user enables identity verification, and subsequent verification is performed silently without interrupting an operation procedure normally performed by the user, thereby further improving user experience.

### BRIEF DESCRIPTION OF THE DRAWINGS

To describe the technical solutions of the embodiments of the present disclosure more clearly, the following briefly introduces the accompanying drawings required for describing the embodiments. Apparently, the accompanying drawings in the following description show only some embodiments of the present disclosure, and a person of ordinary skill in the art may still derive other drawings from these accompanying drawings without inventive efforts.
FIG. 1 is a flowchart of an identity verification method according to an embodiment of the present disclosure;
FIG. 2 is a flowchart of an identity verification method according to an embodiment of the present disclosure;
FIG. 3 is a flowchart of an identity verification method according to an embodiment of the present disclosure;
FIG. 4 is a schematic diagram of an application scenario of an identity verification method according to an embodiment of the present disclosure;
FIG. 5 is a schematic structural diagram of an identity verification apparatus according to an embodiment of the present disclosure;
FIG. 6 is a schematic structural diagram of an identity verification apparatus according to an embodiment of the present disclosure;
FIG. 7 is a schematic structural diagram of an identity verification apparatus according to an embodiment of the present disclosure; and
FIG. 8 is a schematic structural diagram of an electronic device according to an embodiment of the present disclosure.

### DETAILED DESCRIPTION OF THE EMBODIMENTS

The following clearly and completely describes the technical solutions in the embodiments of the present disclosure with reference to the accompanying drawings in the embodiments of the present disclosure. Apparently, the described embodiments are some of the embodiments of the present disclosure rather than all of the embodiments. All other embodiments obtained by a person of ordinary skill in the art based on the embodiments of the present disclosure without creative efforts shall fall within the protection scope of the present disclosure.

### Embodiment 1

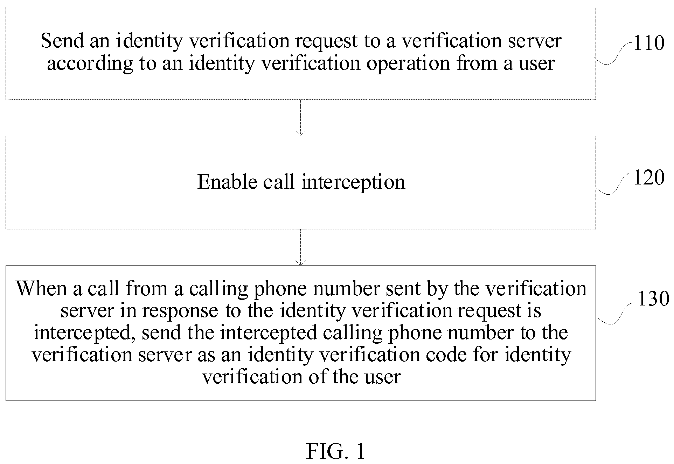

The present disclosure provides an identity verification method. The method may be applied to a device with a client. The device is an electronic device such as a mobile phone, a smartphone, a PAD with a phone function, and a navigation instrument with a phone function. As shown in FIG. 1, the method includes Step 110 to Step 130.

Step 110: an identity verification request is sent to a verification server according to an identity verification operation from a user.

For some application service products that need to determine the authenticity of users, when a user performs registration or a highly risky operation, a service system requires identity verification of the user. For example, for an online shopping application, the service system needs to determine the authenticity of information of a user before it can accept an order placed by the user. Therefore, when the user performs a user registration operation on a client of the application or when the user submits an order by a client of the application, identity verification of the user is usually required to ensure the authenticity of the information of the user.

For example, a button (a soft key or a hard key) for identity verification may be set in a client of an application and used to enable identity verification. After a user presses the button to enable identity verification, the client generates an identity verification request, and sends the identity verification request to a verification server. The identity verification request may carry an identifier of the client. Optionally, the identity verification request may carry identity information such as a username of a current user of the client.

An application scenario of identity verification is not limited to online shopping, and there may further be more applications, which are not enumerated herein. An operation of enabling identity verification by the user is also not limited to registration or order submission by the user. An operation of enabling identity verification is not limited in the present disclosure.

Step 120: call interception is enabled.

A device with a client may have the function of receiving a phone call. For example, an electronic device such as a mobile phone, a smartphone, a PAD with a phone function, and a navigation instrument with a phone function may receive a phone call. In the present disclosure, an example in which the device with the client is a smartphone is used to describe the identity verification method in the present disclosure. For example, a system interface (for example, an incoming call processing interface) may be invoked to perform call interception, or a phone blacklist function may be used to perform call interception. The system interface discussed herein may be an API (Application Programming Interface) provided by an operating system such as Android and iOS, and is not limited thereto. When the phone blacklist function is used to perform call interception, a phone blacklist may be first set in the device with the client. Generally, when a client of an application is installed on a device for the first time, the client automatically adds a group of preset calling phone numbers to a phone blacklist in the device. The preset calling phone number may be a normal phone number or may be a phone number conforming to a preset rule, for example, a VoIP phone number conforming to the preset rule.

The foregoing is merely an example, and another method may further be used to intercept and monitor a preset calling number, and the present disclosure is not limited thereto.

Step 130: when a call from a calling phone number sent by the verification server in response to the identity verification request is intercepted, the intercepted calling phone number is sent to the verification server as an identity verification code for identity verification of the user.

When the preset calling phone number is used to call the device with the client, a system actively intercepts a call initiated from the calling phone number. An incoming call reminder or ringtone does not set off on the device with the client, and no traffic fee is incurred. In addition, when an incoming call is intercepted, the client may invoke a system interface to obtain the intercepted calling phone number, and match the intercepted calling phone number against the calling phone number stored on the client and for identity verification. If the intercepted calling phone number and the calling phone number stored on the client and for identity verification code match successfully, the intercepted calling phone number is sent to the verification server as the identity verification code for identity verification.

In an example, call interception for the preset calling phone number may be enabled before the identity verification request is sent to the verification server. Alternatively, call interception for the preset calling phone number may be enabled and at the same time the identity verification request is sent to the verification server. In the present disclosure, the order of performing the two steps is not limited.

In the identity verification method disclosed in this embodiment of the present disclosure, an identity verification request is sent to a verification server according to an identity verification operation from a user; call interception for a preset calling phone number is enabled; and when a call from the preset calling phone number is intercepted, the intercepted calling phone number is sent to the verification server as an identity verification code for identity verification of a current user, thereby resolving problems that an identity verification method in the prior art has a complex process and is prone to errors. A preset calling phone number is automatically intercepted and sent to a server as an identity verification code. In this way, a user does not need to memorize and transcribe the identity verification code, so that a verification procedure is simplified, no incorrect verification code will be entered any more, and further, identity verification becomes more efficient. In addition, identity verification takes place after the user enables identity verification, and subsequent verification is performed silently without interrupting an operation procedure normally performed by the user, thereby further improving user experience.

### Embodiment 2

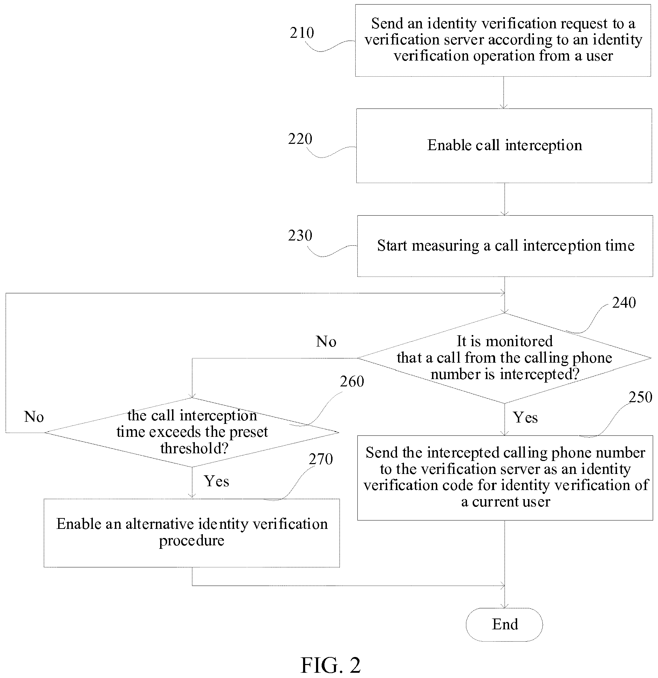

Another embodiment of the present disclosure discloses an identity verification method. As shown in FIG. 2, the method includes Step 210 to Step 270.

Step 210: an identity verification request is sent to a verification server according to an identity verification operation from a user.

For a specific implementation of sending the identity verification request to the verification server according to an operation from the user, refer to related steps in Embodiment 1, and details are not described in this embodiment again.

In an example, an identity verification request sent by a client may include an identifier of the client. The verification server may determine an identifier such as a username of a current user that logs in to the client according to the identifier of the client, and further determine a phone number such as 13612345678, that is registered by the current user in advance. After receiving the identity verification request sent by the client, the verification server may automatically generate a number string with a preset length. For example, the verification server generates a 5-digit number string "00001". The number string may then be combined with a preset prefix such as 10123 according to a preset rule to obtain a calling phone number, such as, 1012300001. Next, the verification server may invoke a VoIP call service to use the calling phone number such as 1012300001 to call the phone number such as 13612345678 of the current user. In addition, the verification server may store a matching relationship between the identifier of the client and the generated calling phone number to facilitate identity verification.

Optionally, if the current user has not registered in advance a phone number for identity verification, the client may pop up an edit box to prompt the user to enter a phone number for identity verification.

Step 220: call interception is enabled.

For example, enabling call interception may include: enabling a call interception operation based on a phone blacklist, where a preset calling phone number is set in the phone blacklist; and monitoring the calling phone number intercepted by the call interception operation.

When a phone blacklist function is used to implement call interception, the preset calling phone number may be first written into the phone blacklist.

For example, the client may automatically add the calling phone number for identity verification to the phone blacklist in the device with the client. The calling phone number for identity verification may be stored in a storage medium of the device with the client. For example, when the client is installed for the first time or the client is turned on for the first time after an update, the client reads the phone blacklist in the device (for example, a mobile phone), and determines whether the calling phone number for identity verification of the user is already stored in the phone blacklist. If the latest calling phone number for identity verification is not stored in the phone blacklist in the device with the client, the calling phone number carried by the client and for identity verification is added to the phone blacklist. Alternatively, when the client is enabled, the client may first send, to the verification server, a request for updating the calling phone number for identity verification, and update a calling phone number obtained by the verification server to the phone blacklist.

For example, the calling phone number for identity verification may be a normal phone number or may be a phone number, for example, a group of VoIP phone numbers from 1012300001 to 1012399999, conforming to the preset rule. The preset rule may be a phone number length and/or a phone number prefix. The calling phone number includes a VoIP phone number matching the preset rule.

The call interception operation for the phone blacklist may then be enabled. For example, a system interface may be invoked to enable a blacklist function. After the blacklist function is enabled, the system filters out a call from a calling number in a blacklist, generates an interception event for the call, and at the same time records the intercepted calling number.

After the call interception operation for the phone blacklist is enabled, the client may monitor in real time the calling phone number intercepted by the call interception operation. For example, the client may monitor an incoming call event of the system or set a hooking function in an incoming call processing procedure of the system, to implement monitoring of call interception, and obtain the calling phone number intercepted by the system.

Step 230: measuring a call interception time is started.

To avoid that the user does not enable an interception function for the phone blacklist or call interception fails, measuring the call interception time may be set in the present disclosure. For example, the call interception time starts to be measured immediately after interception and monitoring of a call from the calling phone number are enabled, and after the call interception time exceeds a preset threshold, an alternative identity verification procedure is enabled.

Step 240: it is determined whether it is monitored that a call from the calling phone number is intercepted, and if yes, perform Step 250, or otherwise, perform Step 260.

After call interception and monitoring the call interception are enabled, it is periodically determined whether it is monitored that a call from the calling phone number is intercepted. When it is monitored that a call from the calling phone number is intercepted, the intercepted calling phone number is sent to the verification server as an identity verification code for identity verification of the current user. If it is not monitored that a call from the calling phone number is intercepted, it is determined whether the call interception time exceeds the preset threshold.

For example, an interface provided by the system may be invoked to obtain the intercepted calling phone number, and the intercepted calling phone number is then compared with the calling phone number for identity verification and stored on the client, so as to determine whether a call from the calling phone number for identity verification is intercepted.

Step 250: the intercepted calling phone number is sent to the verification server as an identity verification code for identity verification of a current user.

For example, the calling phone number stored on the client and for identity verification is 1012300001 to 1012399999. If the intercepted calling phone number is "1012300003", the client sends "1012300003" to the verification server as the identity verification code for the verification server to perform identity verification.

While sending the identity verification code to the verification server, the client may further send the identifier of the client.

After the client sends the intercepted calling phone number to the verification server as the identity verification code, one-time operation of call interception and monitoring the call interception is performed. That is, one-time identity verification is finished.

Step 260: it is determined whether the call interception time exceeds the preset threshold, and if yes, perform Step 270, or otherwise, turn to Step 240.

For example, when the client sends the intercepted calling phone number to the verification server as the identity verification code for identity verification, the call interception time starts to be measured, and the alternative identity verification procedure is started after the call interception time exceeds the preset threshold.

For example, the time threshold may be set to 60 seconds. If within 60 seconds, it is not monitored that a call from the calling phone number for identity verification of the user is intercepted, it is concluded that call interception fails, and the alternative identity verification procedure is started.

Step 270: an alternative identity verification procedure is enabled.

For example, after the call interception time exceeds the preset threshold, the started alternative identity verification procedure may be a verification procedure in which a short message is used to send a verification code. At this point, one-time identity verification is finished.

After receiving the identity verification code sent by the client, the verification server may search the stored matching relationship between client identifier and identity verification code to determine the calling phone number corresponding to a client identifier of the current client, and compare the calling phone number with the identity verification code. If the identity verification code and the calling phone number match, identity verification of the current user of the client succeeds. After identity verification succeeds, the verification server sends a message or a preset instruction to notify the client that identity verification succeeds. If before the expiration time ends, the client does not receive a notification sent by the verification server and indicating that verification of the client succeeds, it is concluded that verification fails.

In the identity verification method disclosed in this embodiment of the present disclosure, a group of preset calling phone numbers for identity verification are written into a phone blacklist; an identity verification request is sent to a verification server according to an identity verification operation from a user; call interception for the group of preset calling phone numbers is enabled; when a call from a calling phone number in the group of calling phone numbers is intercepted, the intercepted calling phone number is sent to the verification server as an identity verification code for identity verification of a current user, thereby resolving problems that an identity verification method in the prior art has a complex process and is prone to errors. A calling phone number for identity verification is written into a phone blacklist, automatically intercepted and sent to a server as an identity verification code. In this way, a user does not need to memorize and transcribe the identity verification code, so that a verification procedure is simplified, no incorrect verification code will be entered any more, and further, identity verification becomes more efficient. In addition, identity verification takes place after the user enables identity verification, and subsequent verification is performed silently without interrupting an operation procedure normally performed by the user, thereby further improving user experience.

Expiration monitoring is performed on call interception, so that an alternative identity verification procedure can be started immediately after call interception fails, thereby improving the efficiency of identity verification. By combining a VoIP call system, a VoIP phone number is randomly generated as an identity verification code, so that it becomes extremely difficult to crack the identity verification code, thereby further improving the safety of an identity verification system.

### Embodiment 3

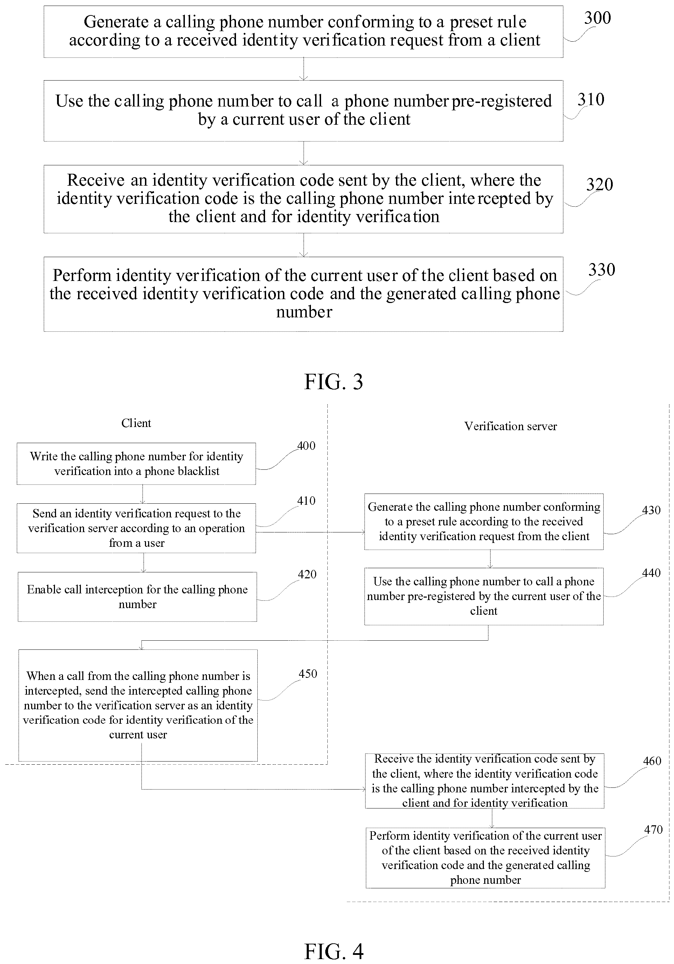

Another embodiment of the present disclosure discloses an identity verification method. As shown in FIG. 3, the method includes Step 300 to Step 330.

Step 300: a calling phone number conforming to a preset rule is generated according to a received identity verification request from a client.

For some application service products that need to determine the authenticity of users, when a user performs registration or a highly risky operation, a service system needs to perform identity verification of the user. For example, for an online shopping application, the service system needs to determine the authenticity of information of a user before it can accept an order placed by the user. Therefore, when the user performs a user registration operation on a client of the application or when the user submits an order by a client of the application, identity verification of the user is usually required to ensure the authenticity of the information of the user.

A button (a soft key or a hard key) for identity verification may be set in a client of an application and used to enable identity verification. After a user presses the button to enable identity verification, the client generates an identity verification request, and sends the identity verification request to a verification server. For example, the identity verification request may carry an identifier of the client. Optionally, the identity verification request may carry identity information such as a username of a current user of the client.

Generating the calling phone number conforming to the preset rule according to the received identity verification request from the client includes: randomly generating a first number string with a preset length according to the received identity verification request from the client; and combining the first number string with a preset number string according to the preset rule to generate the calling phone number.

For example, after receiving the identity verification request sent by the client, the verification server may automatically randomly generate a first number string with a preset length. For example, the verification server may generate a 5-digit number string "00001". The first number string may then be combined with the preset number string according to the preset rule. For example, the preset rule may be: a phone number length and/or a phone number prefix; and a phone number length and/or a phone number suffix. For example, the phone number length in the preset rule is 10 digits, and the phone number prefix is a number string of 10123. The 5-digit first number string "00001" generated by the verification server may be combined with a preset phone number prefix to obtain the calling phone number, for example, 1012300001. The calling phone number may include a VoIP phone number matching the preset rule. The phone number length may be a 5-digit number or a 6-digit number. The sum of the length of the preset prefix or suffix and the phone number length meets a requirement of a VoIP call system.

In an example, the matching relationship between the generated calling phone number and the client may be stored for identity verification.

After generating the calling phone number conforming to the preset rule according to the identity verification request of the client, the verification server may store the matching relationship between the generated calling phone number and the client for identity verification.

Step 310: the calling phone number is used to call a phone number pre-registered by a current user of the client.

Next, the verification server may invoke a VoIP call service to use the generated calling phone number (for example, 1012300001) to call the phone number (for example, 13612345678) of the current user. In addition, the verification server may store the matching relationship between the identifier of the client and the generated calling phone number, thereby facilitating identity verification. For example, when the user logs in to the client, the verification server may use an identifier of the user to further obtain a phone number bound by the current user during registration.

Optionally, if the current user has not pre-registered a phone number for identity verification, the client may pop up an edit box to prompt the user to enter a phone number for identity verification.

Step 320: an identity verification code sent by the client is received, where the identity verification code is the calling phone number intercepted by the client and for identity verification.

After invoking a VoIP call service to use the generated calling phone number to call the phone number of the current user, the verification server may at the same time start an operation of receiving the identity verification code sent by the client.

After sending the identity verification request, the client may at the same time enable call interception and monitoring the call interception, so as to obtain in time an interception event for a call from a calling phone number for identity verification in a phone blacklist. The calling phone number for identity verification in the phone blacklist includes the calling phone number generated by the verification server.

When the verification server uses the generated calling phone number to call the device with the client, the system actively intercepts the call initiated from the calling phone number. An incoming call reminder or ringtone does not set off on the device with the client, and no traffic fee is incurred. In addition, when an incoming call is intercepted, the client may invoke a system interface to obtain the intercepted calling phone number, and match the intercepted calling phone number against the calling phone number stored on the client and for identity verification. If the intercepted calling phone number and the calling phone number stored on the client and for identity verification match successfully, the intercepted calling phone number is sent to the verification server as the identity verification code for identity verification.

Step 330: identity verification of the current user of the client is performed based on the received identity verification code and the generated calling phone number.

After receiving the identity verification code sent by the client, the verification server compares the identity verification code with a calling phone number previously generated for the client to perform consistency check. Performing identity verification of the current user of the client based on the received identity verification code and the generated calling phone number includes: comparing the identity verification code with the generated calling phone number; and if the identity verification code and the generated calling phone number match, identity verification succeeds.

In an example, the calling phone number matching the client is determined from the stored matching relationship between the calling phone number and the client; the identity verification code is compared with the determined calling phone number matching the client. If the identity verification code and the generated calling phone number match, identity verification succeeds. First, the calling phone number matching the client that sends the identity verification code may be determined, according to the identifier of the client, from the matching relationship between the calling phone number and the client stored on the verification server; the calling phone number is then compared with the received identity verification code; and if the identity verification code and the generated calling phone number match, identity verification of the current user of the client that sends the identity verification code succeeds. Otherwise, verification fails.

In the identity verification method disclosed in this embodiment of the present disclosure, a calling phone number conforming to a preset rule is generated according to a received identity verification request from a client; the calling phone number is used to call a phone number pre-registered by a current user of the client; identity verification of the current user of the client is then performed based on a received identity verification code and the generated calling phone number, where the identity verification code is the calling phone number intercepted by the client and for identity verification, thereby resolving problems that an identity verification method in the prior art has a complex process and is prone to errors. A calling phone number for identity verification is written into a phone blacklist, automatically intercepted and sent to a server as an identity verification code. In this way, a user does not need to memorize and transcribe the identity verification code, so that a verification procedure is simplified, no incorrect verification code will be entered any more, and further, identity verification becomes more efficient.

A technical solution of an identity verification method is further described below with reference to a specific application scenario. As shown in FIG. 4, the method is applied to a service product that includes a client and a verification server. The client and the verification server together perform the identity verification method to implement identity verification of a current user of the client. For example, as shown in FIG. 4, a specific process of identity verification includes Step 400 to Step 470.

Step 400: the client writes the calling phone number for identity verification into a phone blacklist.

For a specific implementation of writing, by the client, the calling phone number for identity verification into a phone blacklist, refer to related steps in the foregoing Embodiment 1 and Embodiment 2, and details are not described here again.

Step 410: the client sends an identity verification request to the verification server according to an operation from a user.

For a specific implementation of sending, by the client, the identity verification request to the verification server according to the operation from the user, refer to related steps in the foregoing Embodiment 1 and Embodiment 2, and details are not described here again.

Step 420: the client enables call interception for the calling phone number.

For a specific implementation of enabling, by the client, a call interception for the calling phone number, refer to related steps in the foregoing Embodiment 1 and Embodiment 2, and details are not described here again.

Step 430: the verification server generates the calling phone number conforming to a preset rule according to the received identity verification request from the client.

For a specific implementation of generating, by the verification server, the calling phone number conforming to the preset rule according to the received identity verification request from the client, refer to related steps in the foregoing Embodiment 3, and details are not described here again.

Step 440: the verification server uses the calling phone number to call a phone number pre-registered by the current user of the client.

For a specific implementation of using, by the verification server, the calling phone number to call the phone number pre-registered by the current user of the client, refer to related steps in the foregoing Embodiment 3, and details are not described here again.

Step 450: when a call from the calling phone number is intercepted, the client sends the intercepted calling phone number to the verification server as an identity verification code for identity verification of the current user.

For a specific implementation of sending the intercepted calling phone number as the identity verification code to the verification server when the client monitors that a call from the calling phone number is intercepted, refer to related steps in the foregoing Embodiment 1 and Embodiment 2, and details are not described here again.

Step 460: the verification server receives the identity verification code sent by the client, where the identity verification code is the calling phone number intercepted by the client and for identity verification.

For a specific implementation of receiving, by the verification server, the identity verification code sent by the client, where the identity verification code is the calling phone number intercepted by the client and for identity verification, refer to related steps in the foregoing Embodiment 3, and details are not described here again.

Step 470: the verification server performs identity verification of the current user of the client based on the received identity verification code and the generated calling phone number.

For a specific implementation of performing, by the verification server, identity verification of the current user of the client based on the received identity verification code and the generated calling phone number, refer to related steps in the foregoing Embodiment 3, and details are not described here again.

In the identity verification method disclosed in this embodiment of the present disclosure, a calling phone number for identity verification is written into a phone blacklist; an identity verification request is sent to a verification server according to an operation from a user; call interception for the calling phone number is enabled; and when a call from the calling phone number is intercepted, the intercepted calling phone number is sent to the verification server as an identity verification code for identity verification of a current user, thereby resolving problems that an identity verification method in the prior art has a complex process and is prone to errors. A calling phone number for identity verification is written into a phone blacklist, automatically intercepted and sent to a server as an identity verification code. In this way, a user does not need to memorize and transcribe the identity verification code, so that a verification procedure is simplified, no incorrect verification code will be entered any more, and further, identity verification becomes more efficient. In addition, identity verification takes place after the user enables identity verification, and subsequent verification is performed silently without interrupting an operation procedure normally performed by the user, thereby further improving user experience.

Expiration monitoring is performed on call interception, so that an alternative identity verification procedure can be started immediately after call interception fails, thereby improving the efficiency of identity verification. By combining a VoIP call system a VoIP phone number is randomly generated as an identity verification code, so that it becomes extremely difficult to crack the identity verification code, thereby further improving the safety of an identity verification system.

### Embodiment 4

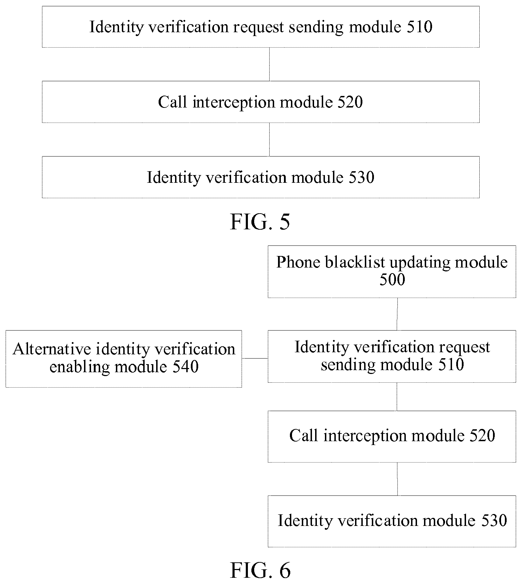

Correspondingly, this embodiment of the present disclosure discloses an identity verification apparatus. As shown in FIG. 5, the apparatus includes:
an identity verification request sending module 510, configured to send an identity verification request to a verification server according to an identity verification operation from a user;
a call interception module 520, configured to enable call interception; and
an identity verification module 530, configured to: when a call from a calling phone number sent by the verification server in response to the identity verification request is intercepted, send the calling phone number intercepted by the call interception module 520 to the verification server as an identity verification code for identity verification of a current user.

Optionally, as shown in FIG. 6, the apparatus further includes:
a phone blacklist updating module 500, configured to write the calling phone number for identity verification into a phone blacklist.

Optionally, the call interception module 520 is further configured to:
enable a call interception operation based on the phone blacklist, where a preset calling phone number is set in the phone blacklist; and monitor the calling phone number intercepted by the call interception operation.

Optionally, as shown in FIG. 6, the apparatus further includes:
an alternative identity verification enabling module 540, configured to: start measuring a call interception time, and after the call interception time exceeds a preset threshold, enable an alternative identity verification procedure.

Optionally, the calling phone number includes a VoIP phone number matching a preset rule.

The identity verification apparatus disclosed in this embodiment of the present disclosure sends an identity verification request to a verification server according to an identity verification operation from a user; enables call interception for a preset calling phone number; and when a call from the calling phone number is intercepted, sends the intercepted calling phone number to the verification server as an identity verification code for identity verification of a current user, thereby resolving problems that an identity verification method in the prior art has a complex process and is prone to errors. A calling phone number for identity verification is written into a phone blacklist, automatically intercepted and sent to a server as an identity verification code. In this way, a user does not need to memorize and transcribe the identity verification code, so that a verification procedure is simplified, no incorrect verification code will be entered any more, and further, identity verification becomes more efficient. In addition, identity verification takes place after the user enables identity verification, and subsequent verification is performed silently without interrupting an operation procedure normally performed by the user, thereby further improving user experience.

Expiration monitoring is performed on call interception, so that an alternative identity verification procedure can be started immediately after call interception fails, thereby improving the efficiency of identity verification. By combining a VoIP call system, a VoIP phone number is randomly generated as an identity verification code, so that it becomes extremely difficult to crack the identity verification code, thereby further improving the safety of an identity verification system.

### Embodiment 5

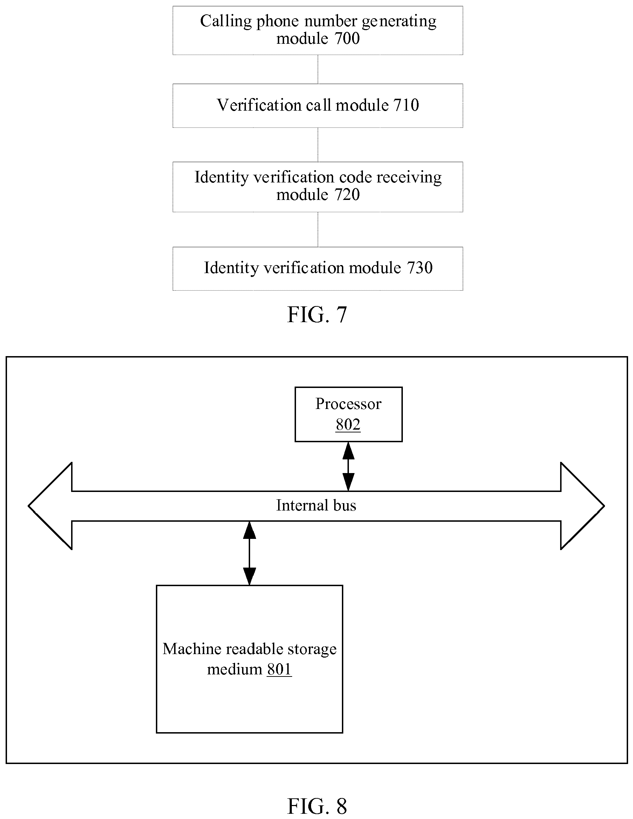

Correspondingly, this embodiment of the present disclosure discloses an identity verification apparatus. As shown in FIG. 7, the apparatus includes:
a calling phone number generating module 700, configured to generate a calling phone number conforming to a preset rule according to a received identity verification request from a client;
a verification call module 710, configured to use the calling phone number generated by the calling phone number generating module 700to call a phone number pre-registered by a current user of the client;
an identity verification code receiving module 720 , configured to receive an identity verification code sent by the client, where the identity verification code is the calling phone number intercepted by the client and for identity verification; and
an identity verification module 730, configured to perform identity verification of the current user of the client based on the identity verification code received by the identity verification code receiving module 720 and the calling phone number generated by the calling phone number generating module 700.

Optionally, the calling phone number generating module 700 is further configured to:
randomly generate a first number string with a preset length according to the received identity verification request from the client; and
combine the first number string with a preset number string according to the preset rule to generate the calling phone number.

Optionally, the calling phone number includes a VoIP phone number matching the preset rule.

Optionally, the identity verification module 730 is further configured to:
compare the identity verification code with the generated calling phone number; and when the identity verification code and the generated calling phone number match, identity verification succeeds.

The identity verification apparatus disclosed in this embodiment of the present disclosure generates, a calling phone number conforming to a preset rule according to a received identity verification request from a client; uses the calling phone number to call a phone number pre-registered by a current user of the client; and then performs identity verification of the current user of the client based on a received identity verification code and the generated calling phone number, where the identity verification code is the calling phone number intercepted by the client and for identity verification, thereby resolving problems that an identity verification method in the prior art has a complex process and is prone to errors. A calling phone number for identity verification is written into a phone blacklist, automatically intercepted and sent to a server as an identity verification code. In this way, a user does not need to memorize and transcribe the identity verification code, so that a verification procedure is simplified, no incorrect verification code will be entered any more, and further, identity verification becomes more efficient.

Correspondingly, the present disclosure further discloses an electronic device. As shown in FIG. 8, the electronic device includes a storage medium 801 and a processor 802. The storage medium 801 stores machine executable instructions operable on the processor 802. When executing the machine executable instructions, the processor 802 implements the identity verification method in Embodiment 1 to Embodiment 3 of the present disclosure. The electronic device may be a mobile terminal, a smartphone with a phone call function, a navigation instrument, a personal digital assistant, a tablet computer or the like.

The present disclosure further discloses a machine readable storage medium, storing machine executable instructions, where when the machine executable instructions are executed by a processor, the steps in the identity verification method in Embodiment 1 to Embodiment 3 of the present disclosure are implemented.

The embodiments in present disclosure are all described in a progressive manner. Description of each of the embodiments focuses on differences from other embodiments, and reference may be made to each other for the same or similar parts among respective embodiments. The apparatus embodiments are substantially similar to the method embodiments and therefore are only briefly described, and reference may be made to the method embodiments for the associated part.

The identity verification method and apparatus of the present disclosure are described above in detail. The principle and implementation of the present disclosure are described herein through specific examples. The description about the embodiments of the present disclosure is merely provided for ease of understanding of the method and core ideas of the present disclosure. Persons of ordinary skill in the art can make variations and modifications to the present disclosure in terms of the specific implementations and application scopes according to the ideas of the present disclosure. Therefore, the specification shall not be construed as a limit to the present disclosure.

Through the above description of the implementations, it is clear to persons skilled in the art that the implementations may be accomplished through software plus a necessary universal hardware platform or may be certainly accomplished through hardware. Based on this understanding, the technical solutions essentially or the part that contributes to the prior art may be embodied in the form of a software product. The computer software product may be stored in a computer readable storage medium (for example, a ROM/RAM, a magnetic disk or an optical disc) and contain several instructions adapted to instruct computer equipment (for example, a personal computer, a server, or network equipment) to perform the method according to the embodiments or some of the embodiments.

## Claims

1. An identity verification method, comprising:
sending, by a client, an identity verification request to a verification server according to an identity verification operation from a user;
enabling, by the client, call interception; and
when a call from a calling phone number sent by the verification server in response to the identity verification request is intercepted, sending, by the client, the intercepted calling phone number to the verification server as an identity verification code for identity verification of the user.

2. The method according to claim 1, wherein enabling the call interception comprises:
enabling, by the client, a call interception operation for a phone blacklist, wherein the calling phone number is set in the phone blacklist; and
monitoring, by the client, the calling phone number intercepted by the call interception operation.

3. The method according to claim 1, further comprising:
starting, by the client, measuring a call interception time, and
after the call interception time exceeds a preset threshold, enabling, by the client, an alternative identity verification procedure.

4. The method according to any one of claims 1 to 3, wherein the calling phone number comprises a Voice over Internet Protocol (VOIP) phone number matching a preset rule.

5. An identity verification method, comprising:
generating, by a server, according to a received identity verification request from a client, a calling phone number conforming to a preset rule;
using, by the server, the calling phone number to call a phone number pre-registered by a current user of the client;
receiving, by the server, an identity verification code sent by the client, wherein the identity verification code is the calling phone number intercepted by the client and for identity verification; and
performing, by the server, identity verification of the current user of the client based on the received identity verification code and the generated calling phone number.

6. The method according to claim 5, wherein generating the calling phone number conforming to the preset rule according to the received identity verification request from the client comprises:
randomly generating, by the server, a first number string with a preset length according to the received identity verification request of the server from the client; and
combining, by the server, the first number string with a preset number string according to the preset rule to generate the calling phone number.

7. The method according to claim 5 or 6, wherein the calling phone number comprises a Voice over Internet Protocol (VOIP) phone number matching the preset rule.

8. The method according to claim 7, wherein performing identity verification of the current user of the client based on the received identity verification code and the generated calling phone number comprises:
comparing, by the server, the identity verification code with the generated calling phone number; and
when the identity verification code and the generated calling phone number match, determining, by the server, that the identity verification succeeds.

9. An identity verification apparatus, comprising:
an identity verification request sending module, configured to send an identity verification request to a verification server according to an identity verification operation from a user;
a call interception module, configured to enable call interception; and
an identity verification module, configured to: when a call from a calling phone number sent by the verification server in response to the identity verification request is intercepted, send the calling phone number intercepted by the call interception module to the verification server as an identity verification code for identity verification of the user.

10. The apparatus according to claim 9, wherein the call interception module is further configured to:
enable a call interception operation for a phone blacklist, wherein the calling phone number is set in the phone blacklist; and
monitor the calling phone number intercepted by the call interception operation.

11. The apparatus according to claim 9, further comprising:
an alternative identity verification enabling module configured to:
start measuring a call interception time, and
after the call interception time exceeds a preset threshold, enable an alternative identity verification procedure.

12. The apparatus according to any one of claims 9 to 11, wherein the calling phone number comprises a Voice over Internet Protocol (VOIP) phone number matching a preset rule.

13. An identity verification apparatus, comprising:
a calling phone number generating module, configured to generate a calling phone number conforming to a preset rule according to a received identity verification request from a client;
a verification call module, configured to use the calling phone number generated by the calling phone number generating module to call a phone number pre-registered by a current user of the client;
an identity verification code receiving module, configured to receive an identity verification code sent by the client, wherein the identity verification code is the calling phone number intercepted by the client and for identity verification; and
an identity verification module, configured to perform identity verification of the current user of the client based on the identity verification code received by the identity verification code receiving module and the calling phone number generated by the calling phone number generating module.

14. The apparatus according to claim 13, wherein the calling phone number generating module is further configured to:
randomly generate a first number string with a preset length according to the received identity verification request of a server from the client; and
combine the first number string with a preset number string according to the preset rule to generate the calling phone number.

15. The apparatus according to claim 13 or 14, wherein the calling phone number comprises a Voice over Internet Protocol (VOIP) phone number matching the preset rule.

16. The apparatus according to claim 15, wherein the identity verification module is further configured to:
compare the identity verification code with the generated calling phone number;
when the identity verification code and the generated calling phone number match, determine that that identity verification succeeds.

17. An electronic device, comprising:
a processor; and
a non-transitory storage medium, wherein the non-transitory storage medium stores machine executable instructions operable on the processor, and when reading and executing the machine executable instructions, the processor is caused to perform the identity verification method according to any one of claims 1 to 8.

18. A machine readable storage medium storing machine executable instructions, wherein when the machine executable instructions are executed by a processor, the identity verification method according to any one of claims 1 to 8 is implemented.
